# EUROPÄISCHE PATENTANMELDUNG

(11) **EP 1 691 303 A1**
(43) Veröffentlichungstag der Anmeldung: **16.08.2006**
(21) Anmeldenummer: 05002659.0
(22) Anmeldetag: 09.02.2005
(51) Int. Cl.: G06F 17/30

(54) **Verfahren und Vorrichtung zur Steuerung des Zugriffes auf verschiedene Datensysteme**

(71) Anmelder: Deutsche Post AG, 53113 Bonn (DE)
(72) Erfinder: Kranz, Jürgen, 50374 Erftstadt (DE); Westerweller, Jörg, 51570 Windeck/Rosbach (DE)
(74) Vertreter: Jostarndt, Hans-Dieter

(57) **Zusammenfassung**

Die Erfindung betrifft ein Verfahren und eine Vorrichtung zur Steuerung des Zugriffes auf wenigstens zwei Datenquellen und/oder Datensenken (30;31) in einem Computersystem (20), wobei das Computersystem aus einem Frontend (40) im Bereich eines Clients und einem Backend (50) im Bereich einer zentralen Serverapplikation besteht und sich die Datenquellen und/oder Datensenken (30;31) im Frontend und/oder im Backend befinden können. Die Datenkomponente (10) befindet sich vorzugsweise im Frontend und weist eine Funktionskomponente (11), eine Zugriffskomponente (12) und eine Adapterkomponente (13) auf. Mittels einer Konfigurationsdatei (60) wird die Konfiguration eines Datenzugriffes in die Funktionskomponente eingelesen, während die technischen Informationen für Aktionen auf den verschiedenen Datensystemen (30;31) in der Zugriffskomponente hinterlegt sind. Durch verschiedene Adapter (14) der Adapterkomponente (13), welche direkt auf die Datensysteme aufsetzen, können verschiedene Datensysteme insbesondere online und offline angesprochen werden. Ferner ermöglicht die Trennung der Funktionskomponente (11) von der Zugriffskomponente (12) die Veränderung der Eigenschaften und Anordnungen der Datensysteme durch eine Anpassung der Konfigurationsdatei, ohne dass die fachliche Logik der Funktionskomponente verändert werden muss.

## Beschreibung

Die Erfindung betrifft eine Vorrichtung zur Steuerung des Zugriffes auf wenigstens zwei Datenquellen und/oder Datensenken in einem Computersystem, wobei das Computersystem aus einem Frontend im Bereich eines Clients und einem Backend im Bereich einer zentralen Serverapplikation besteht und sich die Datenquellen und/oder Datensenken im Frontend und/oder im Backend befinden.

Die Erfindung betrifft ferner ein Verfahren zur Steuerung des Zugriffes auf wenigstens zwei Datenquellen und/oder Datensenken und ein computerlesbares Medium, das Befehle zum Ausführen des Verfahrens auf einem Computermittel aufweist.

Um Computersysteme bereitzustellen, welche möglichst einfach erweiterbar oder veränderbar sind, ist es bekannt, derartige Systeme stark modular auszubilden. Bei den Modulen handelt es sich um standardisierte Komponenten, welche von mehreren anderen Komponenten verwendet werden können. Vorzugsweise können neue Komponenten nach dem "Plug&Play"-Prinzip angeschlossen werden, ohne dass das gesamte System angepasst werden muss. Dabei ist es bekannt, Computersysteme als so genannte Client-Server-Systeme auszubilden, welche mehrere Clients aufweisen, die eine Benutzeroberfläche und eine Schnittstelle der Anwendung bereitstellen. Eine zugehörige Server-Applikation stellt die Funktionalität zur Verfügung. Üblicherweise kann der Bereich des Clients als Frontend bezeichnet werden, während der Bereich der Serverapplikationen oder weiterer Umsysteme als Backend bezeichnet wird.

Um neue Vorgänge in bestehende Retailsysteme integrieren zu können, so dass diese mit einem Anwendungsprogramm durchführbar sind, müssen neue Komponenten in das bestehende System integriert werden. Bei Retailsystemen im Bereich des Versicherungs-, Finanz- und Logistikwesens müssen beispielsweise neue Vorgänge wie die Eröffnung eines Bankkontos, der Abschluss eines Versicherungsvertrages, der Verkauf eines Tickets oder die Einlieferung eines Versandpaketes abgebildet werden. Dabei ist es vorteilhaft, diese fachlichen Vorgänge durch Vorgangsbearbeitungsmodule abzubilden, welche so stark in einzelne Funktionen herunter gebrochen sind, dass für jeden Einzelvorgang ein eigenes Vorgangsbearbeitungsmodul bereitgestellt wird. So können neue Vorgänge und Transaktionen auf einfache Weise in das bestehende System eingehängt werden, indem Vorgangsbearbeitungsmodule mit einem standardisierten Aufbau erzeugt und implementiert werden. Wird darüber hinaus ein Framework mit einem Hauptprogramm verwendet, das die globale Steuerung übernimmt, umfasst das Anwendungsprogramm auf dem Client kein Hauptprogramm, sondern ruft verschiedene Komponenten des Frameworks auf.

Zur Durchführung einer Transaktion mittels eines derartigen Vorgangsbearbeitungsmoduls ist insbesondere die Bereitstellung und Ablage von Daten erforderlich. Dazu verwendete Datenquellen und Datensenken können sich dabei im Frontend oder im Backend des Computersystems befinden und online oder offline angebunden sein. Bei den Datenquellen und Datensenken handelt es sich beispielsweise um lokale Datenbanken, servergestützte Datenbanken, Anwendungsserver oder Umsysteme. Bei derartigen Computersystemen ist es erstrebenswert, dass diese mit möglichst geringem Aufwand verändert und erweitert werden können. Insbesondere die Verlagerung von Datenbanken beispielsweise vom Frontend in das Backend und umgekehrt soll durchführbar sein, ohne dass die gesamte fachliche Funktionslogik des Systems angepasst werden muss. Ferner sollen sowohl Online- als auch Offline-Zugriffe auf die verschiedenen Datensysteme möglich sein.

Aufgabe der Erfindung ist es daher, eine Vorrichtung zur Steuerung des Zugriffes auf wenigstens zwei Datenquellen bzw. Datensenken (Datensysteme) bereitzustellen, wobei die Vorrichtung die einfache Veränderung von Eigenschaften und Anordnungen der Datensysteme ermöglichen soll. Ferner soll sich die Vorrichtung zur modularen Erweiterung des Computersystems mit Vorgangsbearbeitungsmodulen eignen, welche einen Vorgang eines Retailsystems abbilden.

Aufgabe der Erfindung ist es ferner, ein Verfahren zur Steuerung des Zugriffes auf wenigstens zwei Datenquellen und/oder Datensenken bereitzustellen.

Erfindungsgemäß wird diese Aufgabe durch eine Vorrichtung mit den Merkmalen des unabhängigen Anspruches 1 gelöst. Vorteilhafte Weiterbildungen der Vorrichtung ergeben sich aus den Unteransprüchen 2-6. Die Aufgabe wird ferner durch ein Verfahren nach Anspruch 7 gelöst. Vorteilhafte Ausführungsformen des Verfahrens ergeben sich aus den Unteransprüchen 8-9. Anspruch 10 gibt ein computerlesbares Medium zur Durchführung des Verfahrens an.

Die erfindungsgemäße Vorrichtung zur Steuerung des Zugriffes auf wenigstens zwei Datenquellen und/oder Datensenken in einem Computersystem sieht vor, dass das Computersystem aus einem Frontend im Bereich eines Clients und einem Backend im Bereich einer zentralen Serverapplikation besteht. Die Datenquellen und/oder Datensenken befinden sich dabei im Frontend und/oder im Backend. Bei der Vorrichtung handelt es sich um eine Datenkomponente, welche wenigstens eine Funktionskomponente, eine Zugriffskomponente und eine Adapterkomponente umfasst. In die Funktionskomponente ist eine Konfigurationsdatei einlesbar, wobei die Konfigurationsdatei fachliche Informationen für die Zugriffe auf die Datenquellen und/oder Datensenken enthält. Für jede Art des Datenzugriffes, welche von einem oder mehreren der Vorgangsbearbeitungsmodule verwendbar ist, wird somit eine Konfigurationsdatei bereitgestellt.

Die Zugriffskomponente enthält dagegen technische Informationen zu Aktionen auf den Datenquellen und/oder Datensenken und ermöglicht insbesondere die Unterscheidung zwischen Online-und Offline-Zugriffen. Die Adapterkomponente stellt als Schnittstelle eine Verbindung zwischen der Zugriffskomponente und den Datenquellen und/oder Datensenken her und umfasst mehrere Adapter für den direkten Aufsatz auf die Datenquellen und/oder Datensenken. Die Adapterkomponente ermöglicht somit den Zugriff auf unterschiedliche Datensysteme. Dabei ist es vorteilhaft, dass der Datenzugriff transaktional durchgeführt wird und insbesondere die Datenspeicherung nach vorgegebenen Transaktionsplänen erfolgt.

Die Konfigurationsdatei enthält Informationen zu den Datenquellen und/Datensenken, welche von einem Vorgangsbearbeitungsmodul des Computersystems zur Datenablage oder zur Datenabfrage benötigt werden, während in der Zugriffskomponente die Logik für die Erzeugung und Parametrisierung von technischen Zugriffen auf die Datenquellen und/oder Datensenken hinterlegt ist und die Adapterkomponente die Zugriffe auf Schnittstellen der Datenquellen und/oder Datensenken kapselt. Dabei sind die Adapter der Adapterkomponente auf Online- und Offline-Datensysteme aufsetzbar. Ob eine Datenquelle/-senke online oder offline angesprochen wird, wird durch die zugehörige Konfigurationsdatei des Datenzugriffes festgelegt und auf diesem Wege in die Funktionskomponente eingelesen.

In einem besonders bevorzugten Ausführungsbeispiel der Erfindung ist wenigstens ein Adapter auf eine Middleware aufsetzbar und/oder wenigstens ein Adapter auf eine Nachrichtenkomponente aufsetzbar ist, wobei die Nachrichtenkomponente eine Verknüpfung zwischen Frontend und Backend bildet.

Die Erfindung umfasst ferner ein Verfahren zur Steuerung des Zugriffes auf wenigstens zwei Datenquellen und/oder Datensenken in einem Computersystem und ein computerlesbares Medium, das Befehle zum Ausführen der Schritte des Verfahrens auf einem Computermittel aufweist.

Die erfindungsgemäße Datenkomponente und das zugehörige Verfahren haben verschiedene Vorteile. Insbesondere ermöglicht es die Trennung der Funktionskomponente von der Zugriffskomponente, die Eigenschaften und Anordnungen der verschiedenen Datenquellen und Datensenken zu ändern, ohne dass die Funktionskomponente und damit die Vorgangsbearbeitungsmodule des Gesamtsystems verändert werden müssen. Beispielsweise kann eine Datenbank vom Frontend in das Backend verlagert werden, ohne dass die Programmierung der Funktionskomponente verändert werden muss. Wandelt sich von fachlicher Seite ein Zugriff auf eine lokale Datenbank beispielsweise in einem Zugriff auf einen Server (Online-Abfrage), kann dies vom Entwickler dadurch realisiert werden, dass er die für den Zugriff zuständige Konfigurationsdatei verändert. Eine Veränderung der Anordnung von Datensystemen hat somit keinen direkten Einfluss auf die Programmierung der Funktionskomponente. Da die Konfigurationsdatei von mehreren Vorgangsbearbeitungsmodulen genutzt wird, welche den betreffenden Datenzugriff verwenden, steht allen Vorgangsbearbeitungsmodulen der neue Datenzugriff zur Verfügung, ohne dass weitere Anpassungen erforderlich sind. Bei der Erzeugung von Vorgangsbearbeitungsmodulen hat dies wiederum den Vorteil, dass der Entwickler des Moduls keine Kenntnis über den genauen technischen Ablauf beim Datenzugriff haben muss, da er diesen lediglich einsetzt. Dies führt zu einer flexiblen Datenkomponente, welche insbesondere in einem stark modularen und erweiterbaren System eingesetzt werden kann.

Ändert sich die fachliche Logik eines Datenzugriffes, muss ebenfalls lediglich die Konfigurationsdatei angepasst werden, welche in die Funktionskomponente eingelesen wird, während die technische Zugriffskomponente unverändert bleibt. Geänderte fachliche Anforderungen haben somit ebenfalls keine direkte Auswirkung auf den technischen Datenzugriff.

Ferner ermöglicht die Zugriffskomponente den Zugriff auf verschiedene Typen von Datensystemen, wobei insbesondere Online-und Offline-Zugriffe möglich sind. Ebenso werden Zugriffe auf Nachrichtenkomponenten und zusätzliche Middleware ermöglicht. Hierbei trägt die Adapterkomponente dazu bei, dass flexibel ausgewählt werden kann, auf welche Datensysteme zugegriffen wird.

Der Aufbau der Datenkomponente ermöglicht ferner eine einfache und schnelle Lokalisierung und Behebung von Fehlern und verstärkt den modularen Aufbau eines Gesamtsystems, in welches die Datenkomponente integriert ist.

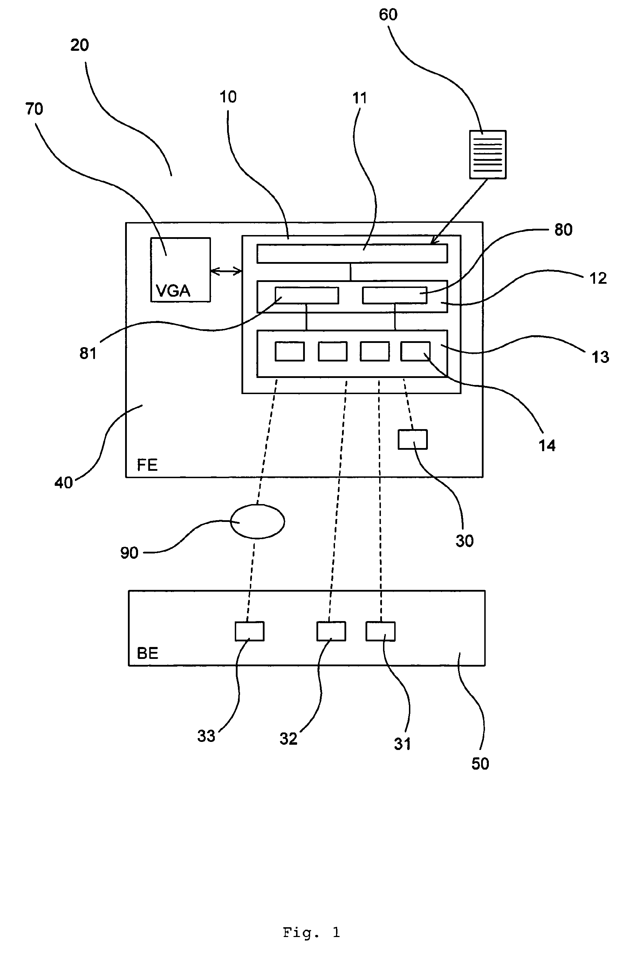

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung Fig.1.

In der Fig. 1 ist schematisch ein besonders bevorzugtes Ausführungsbeispiel des Aufbaus der erfindungsgemäßen Datenkomponente 10 innerhalb eines Computersystems 20 dargestellt. Die zugehörigen erfindungsgemäßen Verfahrensabläufe werden ebenfalls anhand dieser Darstellung erläutert.

In der Fig. 1 ist eine Datenkomponente 10 dargestellt, welche in Verbindung mit wenigstens einem Vorgangsbearbeitungsmodul 70 steht, das im Folgenden auch mit VGA bezeichnet wird. Dabei können zwischen die Datenkomponente und das Vorgangsbearbeitungsmodul weitere Komponenten oder Funktionseinheiten insbesondere des verwendeten Frameworks geschaltet sein, so dass es sich auch um eine indirekte Verbindung handeln kann. Die Datenkomponente ist vorzugsweise im Frontend 40 des Computersystems angeordnet, sie kann jedoch je nach Ausbildung des Systems auch dem Backend 50 zugeordnet werden.

Bei einem Frontend kann es sich beispielsweise um einen Computerarbeitsplatz in einer Filiale, einen Automaten, ein Mobiltelefon oder eine Website auf einem Computer eines Nutzers handeln. Das Frontend ist dadurch definiert, dass an ihm von einem Nutzer Transaktionen oder Vorgänge initiiert und durchgeführt werden können, welche durch einzelne Vorgangsbearbeitungsmodule abgebildet werden. Das Frontend steht somit in direkter Verbindung zu einem Nutzer, während sich das Backend im Hintergrund eines Gesamtsystems befindet und ein Nutzer dadurch keinen direkten Zugriff auf das Backend hat. Ein Nutzer kann nur über das Frontend mit Komponenten des Backends kommunizieren oder auf diese zugreifen. Das Backend stellt zentral Funktionalitäten bereit, auf welche mehrere Clients im Frontend zugreifen können. Bei den Funktionalitäten kann es sich beispielsweise um eine Datenbereitstellung, -überprüfung und -sicherung oder die Verteilung von Daten an Umsysteme handeln. Üblicherweise ist das Frontend räumlich vom Backend getrennt.

Ein Vorgangsbearbeitungsmodul 70 bildet elektronisch einen Vorgang oder Geschäftsprozess ab, welcher von dem Vorgangsbearbeitungsmodul abgewickelt wird. Bei den Vorgängen handelt es sich beispielsweise um Transaktionen innerhalb eines Retailsystems, welche im Bereich des Finanz-, Versicherungs-, und Logistikwesens eingesetzt werden. Ein Vorgangsbearbeitungsmodul dient dabei insbesondere zur Sammlung aller erforderlichen Daten für einen Vorgang. Das Vorgangsbearbeitungsmodul ist auf einem Computermittel installiert, das in Verbindung mit einer Benutzeroberfläche steht. Die Transaktionen können beispielsweise an einem Computerarbeitsplatz in einer Filiale eines Dienstleisters oder an einem Automaten durchgeführt werden. Automaten können für den Verkauf von Fahrkarten, Briefmarken oder sonstigen Dienstleistungen eingesetzt werden, während der Kunde an einem Computerarbeitsplatz einer Filiale selbst oder im Zusammenspiel mit einem Filialbediensteten eine Transaktion durchführen kann. Transaktionen können ferner über Mobiltelefone oder Websites durchgeführt werden, welche ein Kunde auf einem Computer mit Internetzugang aufrufen kann.

Das Vorgangsbearbeitungsmodul ist auf einem Computermittel installiert, das vorzugsweise mehrere Vorgangsbearbeitungsmodule aufweist, welche jeweils einen Vorgang abbilden. Die Vorgangsbearbeitungsmodule können sich dabei ebenfalls im Frontend 40 oder im Backend 50 des Computersystems aus mehreren Komponenten befinden. Vorzugsweise sind die VGAs wie die Datenkomponente 10 im Frontend 40 angeordnet.

In einem besonders bevorzugten Ausführungsbeispiel der Erfindung handelt es sich bei dem Gesamtsystem, in welches die Vorgangsbearbeitungsmodule integriert sind, um ein stark modulares System, in welchem die Vorgänge bis auf kleinste Funktionseinheiten heruntergebrochen sind. Daher kann ein Vorgangsbearbeitungsmodul insbesondere einen Prozess abbilden, welcher Bestandteil mehrerer anderer Vorgangsbearbeitungsmodule ist. Beispielsweise kann ein VGA das Einscannen eines Barcodes, die Erfassung von Ausweisdaten oder die Berechnung eines Wertes abbilden. Diese Einzelprozesse können als Module von anderen Vorgangsbearbeitungsmodulen aufgerufen werden, so dass sie nur einmalig implementiert werden müssen.

Die Vorgangsbearbeitungsmodule 70 befinden sich zusammen mit der Datenkomponente 10 auf einem Client. Der Client kann dabei eine Plattform mit weiteren Komponenten eines Frameworks wie Bibliotheken, Datenbanken, Abrechnungsmodule, etc. nutzen. In einem besonders bevorzugten Ausführungsbeispiel der Erfindung kann eine als CARBON(Component ARchitecture for Business OptimizatioN)-Plattform bezeichnete Plattform genutzt werden, welche als Software realisiert und auf Datenverarbeitungsanlagen installiert ist. Das Framework beinhaltet dabei die Laufzeitbibliothek der Plattform, welche auch als Common Language Runtime bezeichnet wird (CLR). Bei dem Framework handelt es sich um ein API (Application Programming Interface), welches die Funktionalitäten bereitstellt, Clients für verschiedene Assistent-basierte Vorgangsbearbeitungsmodule zu erstellen. Die von dem Framework zur Verfügung gestellten Funktionalitäten umfassen beispielsweise Kernfunktionalitäten wie das Starten/Beenden des Clients oder der Vorgangsbearbeitungsmodule. Das Framework stellt beispielsweise ein gemeinsames Startmodul zum Starten der Vorgangsbearbeitungsmodule bereit. Ferner unterstützt das Framework die Vorgangsbearbeitungsmodule bei der Ablaufsteuerung und stellt Komponenten zum Drucken bereit. Darüber hinaus werden Basisfunktionalitäten wie die Protokollierung oder die Fehlerbehandlung bereitgestellt.

Als vollständig objektorientierte Programmiersprache innerhalb des Frameworks kann beispielsweise C# verwendet werden. Die objektorientierte Programmierung sieht Objekt-Klasse-Beziehungen vor, wobei eine Klasse ein abstrakter Oberbegriff für Objekte ist, die eine gemeinsame Struktur und/oder ein gemeinsames Verhalten aufweisen. Ein Objekt ist dabei ein zur Laufzeit eines Programms vorhandenes Exemplar einer Klasse, für das Speicherplatz zur Verfügung gestellt wird. Ein Objekt ist eine Instanz einer Klasse. Eine Klasse und damit ihre Objekte werden durch Attribute, Operationen, Zusicherungen und Beziehungen charakterisiert, wobei die Klassen die Attribute und Methoden zu einer Einheit zusammenfassen. Die Attribute sind standardmäßig nur über Methoden der Klasse zugänglich, so dass eine Kapselung oder Zugriffsbeschränkung vorliegt. Eine Klasse kann ferner keine, eine oder mehrere explizite Schnittstellen besitzen und die Kapselung trennt die Implementierung von der Schnittstelle.

Das Computersystem 20 umfasst wenigstens zwei Datenquellen bzw. Datensenken 30 und 31, wobei in Fig. 1 weitere Datenquelle/-senken 32 und 33 dargestellt sind. Bei einer Datenquelle handelt es sich um einen Ursprungsort, von welchem Daten geliefert werden. Bei einer Datensenke handelt es sich um einen Bestimmungsort für Daten und somit um eine Empfangsstelle. Die Übernahme von Daten erfolgt üblicherweise über eine standardisierte Schnittstelle. Bei den Datenquellen und Datensenken kann es sich beispielsweise um lokale Datenbanken, servergestützte Datenbanken, Anwendungsserver oder Umsysteme handeln. Derartige Datenquellen und Datensenken werden zur Vereinfachung im Folgenden auch allgemein als Datensysteme bezeichnet. Die Datensysteme können sowohl im Frontend 40 als auch im Backend 50 angeordnet sein. In dem in Fig. 1 dargestellten Ausführungsbeispiel ist ein erstes Datensystem 30 dem Backend BE zuzuordnen, während drei weitere Datensysteme 31, 32 und 33 dem Frontend FE zuzuordnen ist.

Die erfindungsgemäße Datenkomponente 10 umfasst wenigstens eine Funktionskomponente 11, eine Zugriffskomponente 12 und eine Adapterkomponente 13. Erfindungsgemäß ist eine Konfigurationsdatei 60 in die Funktionskomponente 11 einlesbar, wobei die Konfigurationsdatei 60 fachliche Informationen für die Zugriffe auf die Datensysteme enthält. Die Konfigurationsdatei liegt vorzugsweise im XML-Format (Extensible Markup Language) vor und initiiert eine Klasse *DataService* zur Kapselung aller Datenzugriffe. Die Konfiguration erfolgt vorzugsweise mittels schemabasierendem XML und die Initialisierung erfolgt durch die erzeugenden Klassen. Die Konfigurationsdaten werden als XML-Element-Objekte mit einem Konstruktor in die tieferen Schichten weitergegeben. Quelle für eine Konfigurations-XML können beispielsweise eine Anwendungskonfigurationsdatei, eine Konfigurationsdatei eines Vorgangsbearbeitungsmoduls oder eine Konfigurationsdatenbank sein. In einem besonders bevorzugten Ausführungsbeispiel der Erfindung hält die Zugriffskomponente den Konfigurations-XML-Verknüpfungspunkt für die Erzeugung der Datenaktionen vor.

Die Funktionskomponente bildet die fachlichen Inhalte der Vorgangsbearbeitungsmodule 70 ab, wobei beispielsweise in der Konfigurationsdatei 60 hinterlegt ist, in welcher Datenquelle von Vorgangsbearbeitungsmodulen benötigte Daten gespeichert sind oder in welcher Datensenke durch Vorgangsbearbeitungsmodule erfasste Daten hinterlegt werden. Ferner erfolgt die Validierung von Eingabe- und Ausgabewerten durch die Funktionskomponente. Auch die Zusammenführung von Daten aus mehreren Datensystemen wird durch die Funktionskomponente durchgeführt. Technische Details für den Zugriff auf die Datensysteme sind in der Funktionskomponente jedoch erfindungsgemäß nicht enthalten.

Die Funktionskomponente enthält alle fachliche Logik für den Zugriff auf die Datenquellen und -senken. Besteht die Anforderung einer eindeutigen Identifizierung eines Vorganges, so kann dies durch Hinzufügen einer ID mittels Meta-Daten angebildet werden. Die Aufgabe der Funktionskomponente besteht im Wesentlichen in der Kapselung des logischen Zugriffes in einem fachlichen, typisierten Interface. Sie dient ferner als Schnittstelle für die fachliche Parametrisierung des Zugriffes zum Beispiel durch die Übergabe des Prozesskontextes. Die Parametrisierung erfolgt vorzugsweise auf drei Wegen. Zum einen werden in der Konfiguration die technischen Informationen zum Datenzugriff hinterlegt. Zum anderen werden im Konstruktor Parameter übergeben und mit dem Aufruf der fachlichen Methode zugriffsspezifische Parameter übergeben wie z.B. der Name eines Kunden. Darüber hinaus befüllt die Funktionskomponente ein Anfrage-Dataset, interpretiert ein Antwort-Dataset und verwaltet Transaktionskennzeichen wie Rohdatenschlüssel.

Die Zugriffskomponente 12 der Datenkomponente enthält die technischen Informationen zu Aktionen auf den Datensystemen und stellt eine technische Verwaltungsschicht dar. Sie enthält die Logik zur Erzeugung und Parametrisierung von technischen Zugriffen auf die Datensysteme, jedoch keine fachliche Logik. Der Zugriff auf die Datensysteme erfolgt über Schnittstellen in Form von so genannten Datenaktionen und über technische Adapterklassen.

Die Zugriffskomponente 12 wird vorzugsweise als abstrakte Klasse *DataService* ausgeführt. Sie fungiert als Factory für alle Datenaktionen. Eine Datenaktion wird durch eine Klasse implementiert, die eine Schnittstelle in Form eines *IDataAc*tion-Interface implementiert. Jede als Datenaktion fungierende Klasse muss diese Schnittstelle implementieren. Über dieses *IDataAction*-Interface werden alle lokalen und servergestützten Datenzugriffe durchgeführt. Das IDataAction-Interface realisiert vorzugsweise alle allgemeinen Datenoperationen wie Lesen, Schreiben und Manipulieren. Die verschiedenen Klassen zur Unterstützung verschiedener Datenaktionen, welche das *IDataAction*-Interface implementieren, können in servergestützte Dienste und Datenbankadapter unterteilt werden. Vorzugsweise sind daher jeweils *ServerActions* 80 für Serverzugriffe und *DBActions* 81 für Online- und Offline-Datenbankzugriffe vorgesehen.

Die Adapterkomponente 13 stellt als Schnittstelle eine Verbindung zwischen der Zugriffskomponente und den verschiedenen Datensystemen 30, 31, 32 und 33 her. Das fachliche Datenschema der Funktionskomponente 11 und das physikalische Datenschema (Feldnamen und Datentypen) sind dabei nicht notwendigerweise identisch. Sie sind jedoch auf Feldebene ineinander überführbar. Die Adapterkomponente kapselt die Zugriffe auf die nativen Schnittstellen der unterstützten Datensysteme. Die Adapterkomponente setzt dabei vorzugsweise direkt auf die Datensysteme oder eine verwendete Middleware auf. Bei einer Middleware handelt es sich um eine anwendungsunabhängige Komponente, welche Dienstleistungen zur Vermittlung zwischen Anwendungen anbietet. Eine Middleware stellt eine Ebene in einem komplexen Software-System dar, die als Dienstleister anderen ansonsten entkoppelten Softwarekomponenten die Kommunikation untereinander ermöglicht.

Ferner kann wenigstens eine Nachrichtenkomponente 90 eingesetzt werden, welche die Kommunikation zwischen Frontend und Backend ermöglicht. Dazu ist sowohl das Frontend als auch das Backend mit einer geeigneten Schnittstelle ausgebildet. Die Datenübertragung innerhalb der Nachrichtenkomponente 90 basiert vorzugsweise auf XML oder SOAP (Simple Object Access Protocol). In einem besonders bevorzugten Ausführungsbeispiel der Erfindung kann die Verknüpfung der Computermittel des Front- und Backends über Nachrichtenwege mit unterschiedlich schnellen Verbindungen hergestellt werden. Für einen Nachrichtenweg kann beispielsweise eine Middleware eingesetzt werden.

Die Adapterkomponente 13 umfasst vorzugsweise mehrere Adapter 14, welche für den Zugriff auf verschiedene Datensysteme ausgebildet sind. Beispielsweise können entsprechende Adapter für den Zugriff auf verschiedene Datenbanken vorgesehen sein. Durch ein verwendetes Framework können als Adapter für den Datenbankzugriff beispielsweise OLEDB (Open DataBase Connectivity)-, SQL (Standard Query Language)- und EDBC (Enhanced DataBase Container)-Adapter zur Verfügung stehen. Das feldweise Mapping ist für alle Zugriffe, die einen abgeleiteten Adapter verwenden, konfigurierbar.

Für jeden Adapter 14 wird in der Zugriffskomponente eine entsprechende Datenaktion bereitgestellt. Für den SQL-Adapter wird beispielsweise eine Datenaktion in Form einer Klasse SqlIDataAction bereitgestellt, die von der Klasse DBDataAction abgeleitet ist. Mit einem Konstruktor werden die notwendigen Daten für die Datenbankverbindung übergeben. Handelt es sich bei dem Framework, in welches die Datenkomponente 10 integriert ist, um ein .NET-basiertes System, kann der Zugriff auf die Datenbank mit den .NET-Klassen SQLDataAdapter und SQLConnection erfolgen. Für weitere Datenbankadapter können entsprechende Datenaktionen OleDbDataAction oder ODBCDataAction abgeleitet werden.

In der Konfigurationsdatei 60 kann angegeben werden, ob die Verbindung zu einem Datensystem gehalten oder geschlossen werden soll. Es kann beispielsweise vorgesehen sein, dass die Verbindung zur Datenbank bei bestimmten Ereignissen getrennt wird, falls eine Statusvariable auf False gesetzt ist. Zu diesen Ereignissen zählen insbesondere die Vollendung des Datentransfers, die Überschreitung eines Zeitintervalls (Timeout) und/oder eine Fehlermeldung.

Neben Datenbankadaptern unterstützen die Datenaktionen ferner servergestützte Dienste, so dass vorzugsweise eine Klasse ServerOnlineAction und eine Klasse ServerOfflineAction abgeleitet werden. Die Klasse ServerOnlineAction dient zur synchronen Kommunikation zwischen einem Client und dem Server. Hierzu werden die übergebenen Daten beispielsweise von einer Middleware in Nachrichten verpackt und versendet. Diese Klasse kann daher bei der Nutzung serverseitiger Dienste (z.B. Kundensuche), bei der Übermittlung von SOAP-Aufrufen oder der Übermittlung von Nachrichten an vorhandene Applikationsserver angewendet werden. Die ServerOnlineAction erzeugt einen ServerAdapter und einen TemplateProzessor. Mit Aufruf der Zugriffsmethoden wird ein Templatestring mit Kommunikationsparametern expandiert und an die konkreten Adapter weitergeleitet. Zu den Kommunikationsparametern können beispielsweise eine ApplicationID, ClientID, VorgangsID oder VersionisierungsID gehören. Zusätzlich zu der Nachricht oder dem Persistenz-Objekt wird eine Priority-Nachricht erzeugt, welche die Replikation auslöst.

Bei asynchron durchgeführten Online-Zugriffen spielen Timeouts eine entscheidende Rolle. Analog zur Struktur der Datenkomponente kann es sich um fachliche Timeouts und technische Timeouts handeln. Der technische Timeout ist vorzugsweise Teil der technischen Implementationsschicht in Form der Zugriffs- und Adapterkomponente und wird in den Zugriffsadaptern gekapselt. Bei Eintritt eines Timeout wird das Ereignis Timeout ausgeworfen und durch die fachliche Logik weiterverarbeitet. Fachliche Timeouts stellen logische Ereignisse dar, deren Definition in Fachkonzepten der Funktionskomponente ausgearbeitet werden. Beispielsweise kann definiert werden, wann der Timeout gestartet wird, ob der Timeout für eine oder mehrere Datenaktionen gilt und wie die Anwendung auf den Timeout reagieren soll.

Analog zur Klasse ServerOnlineAction wird die Klasse ServerOfflineAction abgeleitet, wobei jedoch die abschließende Priority-Nachricht zur Auslösung einer sofortigen Replikation entfällt. Bevorzugte Anwendungsgebiete für diese Klasse sind serverseitige Dienste wie das Schreiben eines Vertrages oder die Übermittlung von Nachrichten an vorhandene Applikationsserver, die keine Antwort generieren.

Wird zur Kommunikation mit dem Backend 50 eine Benachrichtigungskomponente 90 eingesetzt, realisiert eine zugehörige Klasse eine IDataAction-Fassade für die Schnittstelle der Benachrichtigungskomponente. Eine Transportschicht entscheidet, welche Middleware bzw. welches Protokoll für die Kommunikation mit dem Backend verwendet werden soll. Die Konfiguration dieser Klasse enthält somit nur die Informationen, welche für die Aufbereitung der fachlichen Daten erforderlich ist.

Die Schnittstelle IDataAction-Interface und damit die Zugriffskomponente 12 ermöglicht die vollständige Entkopplung der Funktionskomponente 11 von dem Typ der Datenquelle. Beispielsweise können über das IDataAction-Interface Datenbanken, Applikationsserver und XML-Dateien angesprochen werden, ohne dass dies in der Funktionskomponente spezifiziert sein muss. So ist es insbesondere möglich, den Typ einer Datenquelle zu ändern, ohne dass die Funktionskomponente und damit die fachliche Logik angepasst werden müssen. Ferner ist die Funktionskomponente unabhängig von dem Softwareprodukt der Datenquelle oder Datensenke, so dass insbesondere eine MSDE (**M**icro**S**oft **D**atabase **E**ngine), Oracle- oder Access-Datenbanken angesprochen werden können. Ebenso ist der Ort der Datenquelle von der Funktionskomponente entkoppelt, so dass sich Datensysteme auf einem Client, einem Server oder in einem Umsystem und somit im Frontend 40 oder im Backend 50 befinden können. Dies hat den Vorteil, dass der Ort der Datenbank verändert werden kann, ohne dass die Funktionskomponente modifiziert werden muss. Datensysteme können daher lokal im Frontend verschoben oder zwischen Frontend und Backend bewegt werden, was zu einer hohen Flexibilität des Systems führt.

In einem besonders bevorzugten Ausführungsbeispiel der Erfindung ermöglicht das IDataAction-Interface ferner die Entkopplung der Funktionskomponente von dem Protokoll des Datenzugriffes. So können beispielsweise UDP (User Datagram Protocol) oder TCP/IP (Transmission Control Protocol/Internet Protocol) und verschlüsselte und nicht verschlüsselte Protokolle eingebunden werden. Für den Datentransport können unterschiedliche Nachrichtenkomponenten verwendet werden, wenn beispielsweise verschiedene Geschwindigkeiten beim Datentransfer verwendet werden.

In einem besonders bevorzugten Ausführungsbeispiel der Erfindung werden bei der Bereitstellung und Ablage von Daten definierte Transaktionspläne durchlaufen, welche die Abarbeitung mehrerer Datensenken und -quellen regeln. Die Transaktionspläne sehen insbesondere vor, dass ein Vorgang nur als abgeschlossen bestätigt wird, wenn alle Einzelvorgänge in den verschiedenen Datensystemen erfolgreich waren. Eine Vorgangsbestätigung wird somit nur gegeben, wenn die Aktion vollständig gelungen ist. So kann beispielsweise vorgesehen sein, dass Daten sowohl in einer Datenbank als auch in einer Datei abgelegt werden. Die Speicherung wird erst dann als erfolgreich gemeldet, wenn bestätigt ist, dass die Speicherung in beiden Datensystemen erfolgreich abgeschlossen wurde. Die Transaktionspläne sind vorzugsweise an die Struktur der Datenkomponente angepasst, wodurch eine möglichst schnelle Abarbeitung von transaktionalen Datenzugriffen erreicht wird.

Die Datenkomponente 10 stellt vorzugsweise eine Komponente eines Frameworks dar, welche von anderen Komponenten genutzt werden kann. Beispielsweise kann die Datenkomponente von einer Rohdatenkomponente genutzt werden, welche die erste Erfassung von Datenmaterial in Form einer Rohdatenliste (raw data) verarbeitet.

### Bezugszeichenliste:

- 10: Datenkomponente
- 11: Funktionskomponente
- 12: Zugriffskomponente
- 13: Adapterkomponente
- 14: Adapter
- 20: Computersystem
- 30,31,32,33: Datenquelle, Datensenke, Datensystem
- 40: Frontend, FE
- 50: Backend, BE
- 60: Konfigurationsdatei
- 70: Vorgangsbearbeitungsmodul, VGA
- 80: Server-Datenaktion
- 81: Datenbank-Datenaktion
- 90: Nachrichtenkomponente, Middleware

## Patentansprüche

1. Vorrichtung zur Steuerung des Zugriffes auf wenigstens zwei Datenquellen und/oder Datensenken (30;31) in einem Computersystem (20), wobei das Computersystem aus einem Frontend (40) im Bereich eines Clients und einem Backend (50) im Bereich einer zentralen Serverapplikation besteht und sich die Datenquellen und/oder Datensenken (30;31) im Frontend (40) und/oder im Backend (50) befinden,
**dadurch gekennzeichnet,**
**dass** die Vorrichtung eine Datenkomponente (10) ist, welche wenigstens die folgenden voneinander getrennten Einzelkomponenten umfasst:
- Funktionskomponente (11), in welche eine Konfigurationsdatei (60) einlesbar ist, wobei die Konfigurationsdatei (60) fachliche Informationen für die Zugriffe auf die Datenquellen und/oder Datensenken (30;31) enthält;
- Zugriffskomponente (12), wobei die Zugriffskomponente (12) technische Informationen zu Aktionen auf den Datenquellen und/oder Datensenken (30;31) enthält;
- Adapterkomponente (13), wobei die Adapterkomponente (13) als Schnittstelle eine Verbindung zwischen der Zugriffskomponente (12) und den Datenquellen und/oder Datensenken (30;31) herstellt und mehrere Adapter (14) für den direkten Aufsatz auf die Datenquellen und/oder Datensenken (30;31) umfasst.

2. Vorrichtung nach Anspruch 1,
**dadurch gekennzeichnet,**
**dass** die Datenkomponente (10) im Bereich des Frontends (40) angeordnet ist.

3. Vorrichtung nach einem oder beiden der Ansprüche 1 und 2,
**dadurch gekennzeichnet,**
**dass** die Konfigurationsdatei (60) Informationen zu den Datenquellen und/Datensenken (30;31) enthält, welche von einem Vorgangsbearbeitungsmodul (70) des Computersystems (20) zur Datenablage oder zur Datenabfrage benötigt werden, während in der Zugriffskomponente (12) die Logik für die Erzeugung und Parametrisierung von technischen Zugriffen auf die Datenquellen und/oder Datensenken hinterlegt ist und die Adapterkomponente (13) die Zugriffe auf Schnittstellen der Datenquellen und/oder Datensenken (30;31) kapselt.

4. Vorrichtung nach einem oder mehreren der Ansprüche 1 bis 3, **dadurch gekennzeichnet, dass** die Adapter (14) der Adapterkomponente (13) auf Online- und Offline-Datensysteme aufsetzbar sind.

5. Vorrichtung nach Anspruch 4,
**dadurch gekennzeichnet,**
**dass** wenigstens ein Adapter (14) auf eine Middleware aufsetzbar ist.

6. Vorrichtung nach einem oder beiden der Ansprüche 4 und 5,
**dadurch gekennzeichnet,**
**dass** wenigstens ein Adapter (14) auf eine Nachrichtenkomponente (90) aufsetzbar ist, wobei die Nachrichtenkomponente (90) eine Verknüpfung zwischen Frontend (40) und Backend (50) bildet.

7. Verfahren zur Steuerung des Zugriffes auf wenigstens zwei Datenquellen und/oder Datensenken (30;31) in einem Computersystem (20), wobei das Computersystem aus einem Frontend (40) im Bereich eines Clients und einem Backend (50) im Bereich einer zentralen Serverapplikation besteht und sich die Datenquellen und/oder Datensenken (30;31) im Frontend (40) und/oder im Backend (50) befinden,
**dadurch gekennzeichnet,**
**dass** eine Datenkomponente (10) mit wenigstens drei voneinander getrennten Einzelkomponenten in Form einer Funktionskomponente (40), einer Zugriffskomponente (11) und einer Adapterkomponente (13) bereitgestellt wird und dass eine Konfigurationsdatei (60) in die Funktionskomponente (40) eingelesen wird, wobei die Konfigurationsdatei (60) fachliche Informationen für die Zugriffe auf die Datenquellen und/oder Datensenken (30;31) enthält, während technische Informationen zu Aktionen auf die Datenquellen und/oder Datensenken (30;31) in der Zugriffskomponente (12) und Adapter (14) zum direkten Aufsatz auf die Datenquellen und/oder Datensenken (30;31) in der Adapterkomponente (13) hinterlegt werden.

8. Verfahren nach Anspruch 7,
**dadurch gekennzeichnet,**
**dass** die Datenkomponente (10) im Bereich des Frontends (40) angeordnet wird.

9. Verfahren nach einem oder beiden der Ansprüche 7 und 8,
**dadurch gekennzeichnet,**
**dass** in der Konfigurationsdatei (60) Informationen zu den Datenquellen und/Datensenken (30;31) hinterlegt werden, welche von einem Vorgangsbearbeitungsmodul (70) des Computersystems (20) zur Datenablage oder zur Datenabfrage benötigt werden, während in der Zugriffskomponente (12) die Logik für die Erzeugung und Parametrisierung von technischen Zugriffen auf die Datenquellen und/oder Datensenken hinterlegt wird.

10. Computerlesbares Medium, das Befehle zum Ausführen der Schritte des Verfahrens 7 auf einem Computermittel aufweist.
